# EUROPÄISCHE PATENTSCHRIFT

(11) **EP 4 574 087 B1**
(45) Veröffentlichungstag und Bekanntmachung des Hinweises auf die Patenterteilung: **10.12.2025**
(21) Anmeldenummer: 23217864.0
(22) Anmeldetag: 19.12.2023
(51) Int. Cl.: A61C 11/08

(54) **FIXIERUNGSSYSTEM ZUM FIXIEREN EINES DENTALMODELLS IN EINEM ARTIKULATOR**
FIXATION SYSTEM FOR FIXING A DENTAL MODEL IN AN ARTICULATOR
SYSTÈME DE FIXATION POUR FIXER UN MODÈLE DENTAIRE DANS UN ARTICULATEUR

(43) Veröffentlichungstag der Anmeldung: 25.06.2025
(73) Patentinhaber: CADdata 3D GmbH, 52379 Langerwehe (DE)
(72) Erfinder: Esser-Nobis, Frank, 52379 Langerwehe (DE)
(74) Vertreter: Limbeck, Achim

(56) Entgegenhaltungen:
- WO-A1-2008/103481
- DE-C5- 102004 016 199
- DE-U1- 20 213 830
- FR-A1- 2 837 377

## Beschreibung

### Technisches Gebiet

Die vorliegende Erfindung betrifft ein Fixierungssystem zum Fixieren eines Dentalmodells nach dem Oberbegriff des Patentanspruchs 1, das eine zur Aufnahme eines Dentalmodells vorgesehene Splitcastplatte und eine in einem Artikulator anordbare und mit der Splitcastplatte verbindbare Sockelplatte umfasst.

### Stand der Technik

Aus dem Stand der Technik sind Fixierungssysteme zum Fixieren eines Dentalmodells unlängst bekannt. Diese umfassen eine zur Aufnahme eines Dentalmodells vorgesehene Splitcastplatte (nachstehend auch als Patrize bezeichnet) und eine in einem Artikulator anordbare und mit der Splitcastplatte verbindbare Sockelplatte (nachstehend auch als Matrize bezeichnet), wobei an der Splitcastplatte mehrere Vertiefungen und an der Sockelplatte mehrere mit den Vertiefungen zumindest abschnittsweise entsprechend korrespondierend ausgebildete Ausbuchtungen zur Lagefixierung der Splitcastplatte in der horizontalen und vertikalen Ebene ausgebildet sind.

Nachteilig bei den bekannten Fixierungssystemen ist, dass bei der digitalen Herstellung von Dentalmodellen durch den Drucker und die Druckmaterialen bei den üblichen Lagefixierungen eines Oberkiefer- und Unterkiefermodells in einem Kieferbewegungssimulator (Artikulator) mit Hilfe bekannter Splitcastsysteme im 3D Druckbereich Druckfehler und Größenunterschiede von bis zu 0,1 mm entstehen.

Die DE 202 13 830 U1 offenbart ein Fixierungssystem zum Fixieren eines Dentalmodells, umfassend eine in einem Artikulator anordbare und zur Aufnahme eines Dentalmodells vorgesehene Splitcastplatte und eine mit der Splitcastplatte verbindbare Sockelplatte, wobei an der Splitcastplatte mehrere Vertiefungen und an der Sockelplatte mehrere mit den Vertiefungen zumindest abschnittsweise entsprechend korrespondierend ausgebildete Ausbuchtungen - oder umgekehrt - zur Lagefixierung der Splitcastplatte in der horizontalen und vertikalen Ebene ausgebildet sind, wobei die Sockelplatte mindestens ein zumindest bereichsweise randseitig umlaufendes und nach außen abgeschrägtes erstes Schrägprofil umfasst und die Splitcastplatte mindestens ein zumindest bereichsweise randseitig umlaufendes, nach außen abgeschrägtes und mit dem ersten Schrägprofil entsprechend korrespondierend ausgebildetes, zweites Schrägprofil umfasst, wobei an der Sockelplatte mindestens ein die Sockelplatte zumindest bereichsweise randseitig umlaufendes erstes Auflageprofil ausgebildet ist und an der Splitcastplatte mindestens ein zumindest bereichsweise randseitig umlaufendes und zur Auflage auf dem ersten Auflageprofil mit dem ersten Auflageprofil entsprechend korrespondierend ausgebildetes zweites Auflageprofil ausgebildet ist, wobei das erste Auflageprofil (27') und/oder das zweite Auflageprofil derart ausgebildet sind, dass zwischen der Splitcastplatte und der Sockel platte ein oder mehrere horizontale Spalte gebildet sind.

Aus der DE 10 2004 016 199 C5 ist ebenfalls ein gattungsgemäßes Fixierungssystem bekannt, welches über mehrere horizontale Spalten verfügt. Die FR 2 837 377 A1 offenbart eine Splitcastplatte, eine Sockelplatte und ein zusätzliches Zwischensegment zum Einstellen der Höhe eines Dentalmodells.

### Darstellung der Erfindung

Der vorliegenden Erfindung liegt die Aufgabe zugrunde, die vorgenannten Nachteile zu beseitigen und ein Fixierungssystem zum Fixieren eines Dentalmodells zu schaffen, welches eine genau Lagefixierung eines Oberkiefer- und Unterkiefermodell in einem Kieferbewegungssimulator (Artikulator) mit Hilfe eines Splitcastsystems ohne Gips erlaubt und eine gleichbleibende, senkrechte Lagefixierung und eine horizontale Lagefixierung gewährleistet.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Fixierungssystems sind in den abhängigen Unteransprüchen angegeben.

Das erfindungsgemäße Fixierungssystem ist so gestaltet, dass die einzige Auflagefläche durch erstes und zweites Auflageprofil gebildet wird, die vorzugsweise direkt an dem/den Schrägprofil/en angeordnet sind, wobei es durch die unterschiedlich definierten Spalten durch eine prozessbedingte Herstellung zu einer immer gleichbleibenden senkrechten Lagefixierung und eine horizontale Lagefixierung durch die geringere Spaltbildung kommt. Grobe Prozessbedingte Größenunterschiede werden durch den größeren Spalt kompensiert bzw. berücksichtigt. Dies ermöglicht das Gips frei ein artikulieren.

Dabei bezieht sich das erfindungsgemäße Fixierungssystem auf die digitale Herstellung eines Modells. Dazu wird ein Modell (Zahnkranz) mit der Splitcastplatte (Patrize) digital verbunden und mit Hilfe von Print-Verfahren (CAM- Verfahren) produziert. Das Gegenstück bildet hierbei die Sockelplatte (Matrize).

Dabei werden auch die vorgesehenen - vorzugsweise im Querschnitt dreieckförmig ausgebildeten - Ausbuchtungen) um einen definierten Faktor (von vorteilhafterweise etwa 0,10mm) entkoppelt und der alleinige Kontakt durch erstes und zweites Auflageprofil hergestellt.

Durch etwaige Druckfehler können unter Umständen die Ausbuchtungen und die entsprechenden Vertiefungen wieder in Kontakt kommen, wobei dies je nach Situation durch entsprechende Ausgestaltung angleichen werden kann.

Das Fixierungssystem wird vorzugsweise mit Hilfe eines Magneten immer zentriert und durch erstes und zweites Auflageprofil in der Höhe fixiert. Somit wird gewährleistet, dass die gedruckten Modelle in allen Richtungen immer definiert liegen.

Aus den im Stand der Technik bekannten Systeme sind entsprechende Spaltenbildungen nicht bekannt, hier wird hingegen ein direkter Kontakt aller Flächen oder mindestens auf die kompletten Flächen von Schrägprofilen und den Dreiecken (Ausbuchtungen, Vertiefungen) gesetzt. Außerdem handelt es sich bei diesen Systemen um industriel gefertigte Arbeitsplatten.

### Kurzbeschreibung der Zeichnungen

Weitere Ziele, Merkmale, Vorteile und Anwendungsmöglichkeiten des erfindungsgemäßen Fixierungssystems ergeben sich aus der nachfolgenden Beschreibung eines Ausführungsbeispiels anhand der Zeichnungen.

In den Zeichnungen zeigen
Fig. 1 Splitcastplatte und Sockelplatte des erfindungsgemäßen Fixierungssystems in einer vorteilhaften Ausführungsform in einer Schnittansicht;
Fig. 2 das erfindungsgemäße Fixierungssystem in der Draufsicht;
Fig. 3 Splitcastplatte und Sockelplatte des erfindungsgemäßen Fixierungssystems in einer weiteren Schnittansicht;
Fig. 4 die Splitcastplatte in perspektivischer Ansicht;
Fig. 5 die Sockelplatte in perspektivischer Ansicht;
Fig. 6 eine Explosionsansicht eines kompletten Aufbaus mit Splitcastplatte und Sockelplatte in perspektivischer Ansicht;

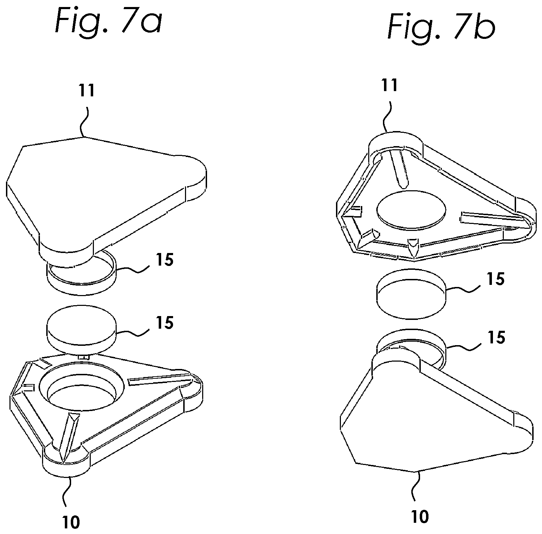

Fig. 7a, 7b Splitcastplatte und Sockelplatte in unterschiedlichen perspektivischen Ansichten.

### Ausführung der Erfindung

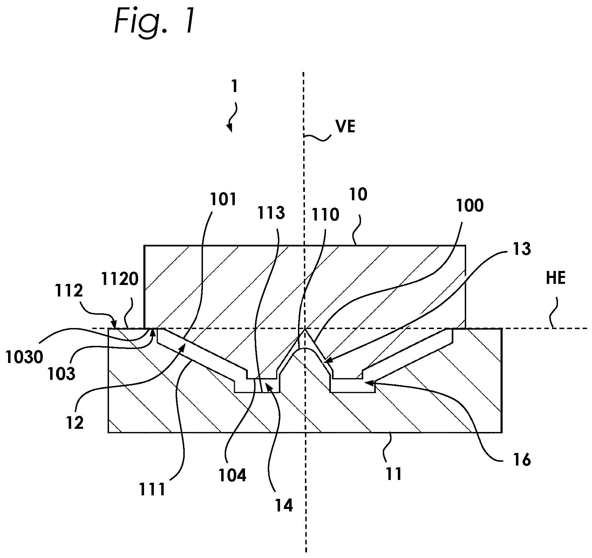

Wie aus Fig. 1 ersichtlich, umfasst das erfindungsgemäße Fixierungssystem 1 eine in einem Artikulator anordbare und zur Aufnahme eines Dentalmodells vorgesehene Splitcastplatte 10 und eine mit der Splitcastplatte 10 verbindbare Sockelplatte 11.

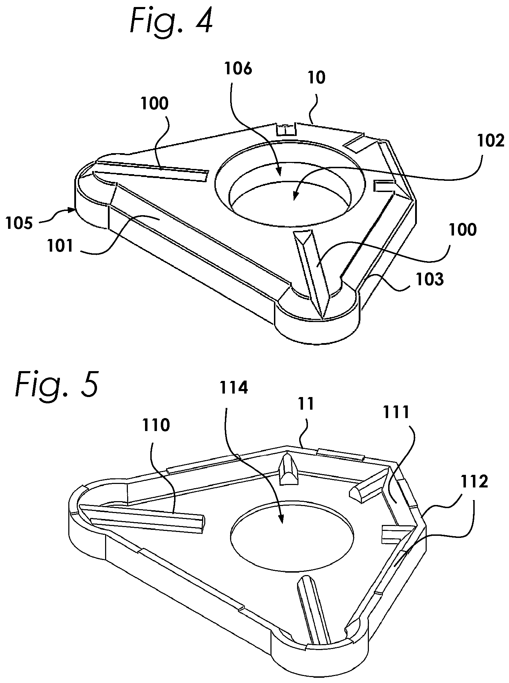

An der Splitcastplatte 10 sind mehrere - vorzugsweise sich aus Richtung Splitcastplattenrand 101 in Richtung Splitcastplattenzentrum 102 erstreckende und ganz besonders bevorzugt in ihrem Querschnitt dreieckförmige (siehe beispielhaft in Fig. 4) - Vertiefungen 100 ausgebildet.

Weiterhin sind an der Sockelplatte 11 mehrere mit den Vertiefungen 100 zumindest abschnittsweise entsprechend korrespondierend ausgebildete Ausbuchtungen 110 (siehe beispielhaft in Fig. 5) zur Lagefixierung der Splitcastplatte 10 in der horizontalen HE und vertikalen Ebene VE ausgebildet.

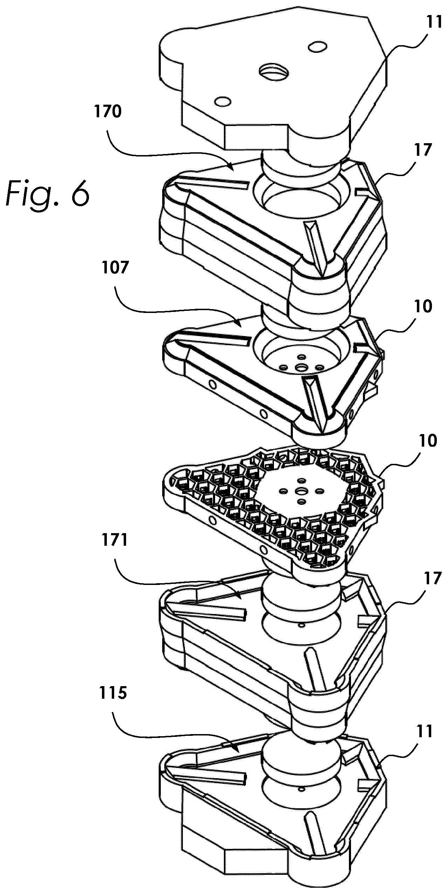

Wie aus Fig. 6 ersichtlich, kann das Fixierungssystem 1 in einer besonders vorteilhaften Ausführungsform der Erfindung zwischen der Splitcastplatte 10 und der Sockelplatte 11 zusätzlich ein oder mehrere Zwischensegmente 17 umfassen. Ein Zwischensegment 17 ist hierzu an einer Seite 170 entsprechend dem Profil (bzw. der Oberflächenkontur) der Oberseite 107 der Splitcastplatte 10 und an der gegenüberliegenden Seite 171 entsprechend dem Profil (bzw. der Oberflächenkontur) der Unterseite 115 der Sockelplatte 11 ausgebildet, in der Weise, dass eine ensprechend den Vorgaben der Verbindung zwischen der Sockelplatte 11 und der Splitcastplatte 10 entsprechende Verbindung sowohl zwischen dem Zwischensegment 17 und der Sockelplatte 11 als auch zwischen dem Zwischensegment 17 und der Splitcastplatte 10 hergestellt werden kann.

Die Erfindung schließt ein, dass in einer alternativen Ausführungsform der Erfindung umgekehrt auch an der Splitcastplatte 10 Ausbuchtungen und an der Sockelplatte 11 entsprechende Vertiefungen (wie beschrieben) ausgebildet sind («oder umgekehrt»).

Die Sockelplatte 11 umfasst mindestens ein zumindest bereichsweise randseitig umlaufendes und nach außen abgeschrägtes erstes Schrägprofil 111, wie dies beispielhaft in Fig. 1 abgebildet ist, wobei die Splitcastplatte 10 mindestens ein zumindest bereichsweise randseitig umlaufendes, nach außen abgeschrägtes und mit dem ersten Schrägprofil 111 entsprechend korrespondierend ausgebildetes, zweites Schrägprofil 101 umfasst.

An der Sockelplatte 11 ist weiterhin mindestens ein die Sockelplatte 11 zumindest bereichsweise randseitig umlaufendes erstes Auflageprofil 112 und an der Splitcastplatte 10 mindestens ein zumindest bereichsweise randseitig umlaufendes und zur Auflage auf dem ersten Auflageprofil 112 mit dem ersten Auflageprofil 112 entsprechend korrespondierend ausgebildetes zweites Auflageprofil 103 ausgebildet.

Das erste Auflageprofil 112 und/oder das zweite Auflageprofil 103 ist/sind dabei erfindungsgemäß derart ausgebildet, dass zwischen der Splitcastplatte 10 und der Sockelplatte 11 ein oder mehrere diagonale und/oder schräge Spalte 12, 13, 14 gebildet sind.

Die schrägen Spalten 13 zwischen den Vertiefungen 100 und den Ausbuchtungen 110 sind dabei etwa 0,03 bis 0,06 mm, besonders bevorzugt 0,055mm groß.

Eine weitere Ausführungsform der Erfindung sieht vor, dass an der Splitcastplatte 10 und an der Sockelplatte 11 sich jeweils in der horizontalen Ebene HE parallel gegenüberliegende Flächen 104, 113 ausgebildet sind, wobei der das erste Auflageprofil 112 und/oder das zweite Auflageprofil 103 derart ausgebildet ist/sind, dass zwischen den Flächen 104, 113 ein oder mehrere horizontale Spalte 14 gebildet sind.

Überdies kann es - wie bereits eingangs erwähnt - vorteilhaft sein, wenn das erste Auflageprofil 112 an dem zweiten Schrägprofil 101 und das zweite Auflageprofil 103 an dem ersten Schrägprofil 111 ausgebildet ist.

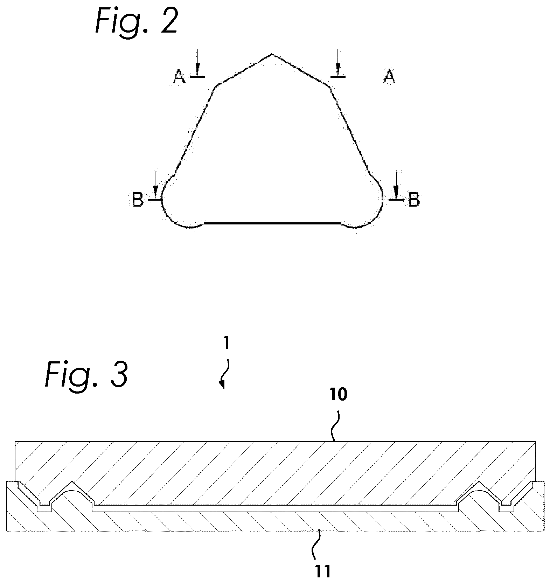

Wie aus Fig. 1 und Fig. 3 ersichtlich, ist das erste Auflageprofil 112 gegenüber dem zweiten Auflageprofil 103 vorzugsweise derart ausgebildet ist, dass dieser das zweite Auflageprofil 103 zumindest abschnittsweise nach außen hin überragt.

An dem zweiten Auflageprofil 103 und an dem ersten Auflageprofil 112 können zur gegenseitigen flächigen Auflage miteinander in der horizontalen Ebene HE entsprechend korrespondierend ausgebildete Auflageflächen 1030, 1120 ausgebildet sein.

Die Spalte 12, 16, 14 sind vorzugsweise zwischen 0,45mm und 0,5mm groß. Diese bestehen vorzugsweise sowohl aus horizontalen, senkrechten und diagonalen Spalten.

Der diagonale Spalt 12 in Richtung Schrägprofil weist vorzugweise die gleiche Spaltgröße von 0,4mm wie die senkrecht verlaufende Spalte 16 auf. Dieser ergibt sich aus dem Zusammenrechnen der horizontalen Flächen der Splitcastplatte 10 und der diagonalen Flächen, die zum Schrägprofil hin zeigen in die Sockelplatte 11 um 0,4mm. Die Dreiecke (Vertiefungen 100 und Ausbuchtungen 110) bleiben hier unangetastet und stehen im vollen Kontakt. Durch das anschließende Entkoppeln (Anheben) der Splitcastplatte 10 und der Sockelplatte 11 durch das erste Auflageprofil 112 um den bevorzugten Faktor 0,1mm erhöht sich der Spalt nach der Ebenen auf vorzugweise 0,5mm beim Spalt 14 und bei der Diagonalen durch den Winkel der Spalt 12 auf vorzugweise 0,45mm.

Die diagonal verlaufenden Spalten 13 im Bereich der Dreiecke wird durch dieses Vorgehen vorzugsweise um den Faktor 0,0333...mm bis 0,0555 durch den Winkel bestimmt gebildet. Durch diese Vorgehensweise wird der einzige Kontaktfläche über die das erste Auflageprofil 112 und zweite Auflageprofil 103 gebildet.

Der Magnet, der in der Magnetaufnahme 114 - vorzugsweise im Zentrum (Mittelpunkt) der Sockelplatte aufgenommen ist, wird durch zwei Magnetabdeckungen 15 abgedeckt und vorzugsweise obligatorisch mit einer Schraube fixiert. Die Magnete zentrieren die Sockelplatte 11 und die Splitcastplatte 10. Hierbei wird die Abzugskraft der beiden Platten zueinander durch die Magnetkraft und die Größe des senkrechten Spalts 16 bestimmt.

Durch das erfindungsgemäße Fixierungssystem 1 werden Ungenauigkeiten bei der prozessbedingten Herstellung der Splitcastplatte 10 von vorzugsweise bis zu 0,1mm ausgeglichen und ermöglichen das gipsfreie einartikulieren. Der senkrechte Spalt 16 gleicht hierbei vorzugsweise grobe Ungenauigkeiten des Druckbettes, Druckplatte aus. Der horizontale Spalt 14 gleicht hierbei vorteilhafterweise den Elefantenfuß, der druckbedingt entsteht, aus. Der diagonale Spalt 12 gleicht vorzugsweise grobe Druckungenauigkeiten aus. Der horizontale Spalt 14 gleicht weiterhin vorzugsweise feine Druckungenauigkeiten aus und soll bzw. kann somit den zweiten Kontakt nach der Herstellung durch prozessbedingte Ungenauigkeiten bilden. Der vergrößerte Spalt durch die Abrundung der Dreiecke der Sockelplatte 11 dient vorzugsweise lediglich als Platzhalter für Schmutzpartikel.

### Liste der Bezugsziffern

- 1: Fixierungssystem
- 10: Splitcastplatte
- 11: Sockelplatte
- 12: Spalte
- 13: schräge Spalte
- 14: horizontale Spalte
- 15: Magnetabdeckungen
- 16: senkrecht verlaufende Spalte
- 17: Zwischensegment
- 100: Vertiefungen an der Splitcastplatte
- 101: zweites Schrägprofil an der Splitcastplatte
- 102: Splitcastplattenzentrum an der Splitcastplatte
- 103: zweites Auflageprofi an der Splitcastplatte
- 104: Flächen an der Splitcastplatte
- 105: Splitcastplattenrand an der Splitcastplatte
- 106: Magnetaufnahme an der Splitcastplatte
- 107: Oberseite der Splitcastplatte
- 110: Ausbuchtungen an der Sockelplatte
- 111: erstes Schrägprofil an der Sockelplatte
- 112: erstes Auflageprofil an der Sockelplatte
- 113: Flächen an der Sockelplatte
- 114: Magnetaufnahme an der Sockelplatte
- 115: Unterseite der Sockelplatte
- 170: eine Seite des Zwischensegments
- 171: gegenüberliegende Seite des Zwischensegments
- 1030: Auflagefläche am zweiten Auflageprofi
- 1120: Auflagefläche am erstes Auflageprofil
- HE: horizontale Ebene
- VE: vertikale Ebene

## Patentansprüche

1. Fixierungssystem (1) zum Fixieren eines Dentalmodells, umfassend eine in einem Artikulator anordbare und zur Aufnahme eines Dentalmodells vorgesehene Splitcastplatte (10) und eine mit der Splitcastplatte (10) verbindbare Sockelplatte (11), wobei
a) an der Splitcastplatte (10) mehrere Vertiefungen (100) und
b) an der Sockelplatte (11) mehrere mit den Vertiefungen (100) zumindest abschnittsweise entsprechend korrespondierend ausgebildete Ausbuchtungen (110)
- oder umgekehrt -
zur Lagefixierung der Splitcastplatte (10) in der horizontalen (HE) und vertikalen Ebene (VE) ausgebildet sind, wobei
c) die Sockelplatte (11) mindestens ein zumindest bereichsweise randseitig umlaufendes und nach außen abgeschrägtes erstes Schrägprofil (111) umfasst und
d) die Splitcastplatte (10) mindestens ein zumindest bereichsweise randseitig umlaufendes, nach außen abgeschrägtes und mit dem ersten Schrägprofil (111) entsprechend korrespondierend ausgebildetes, zweites Schrägprofil (101) umfasst, wobei
e) an der Sockelplatte (11) mindestens ein die Sockelplatte (11) zumindest bereichsweise randseitig umlaufendes erstes Auflageprofil (112) ausgebildet ist und
f) an der Splitcastplatte (10) mindestens ein zumindest bereichsweise randseitig umlaufendes und zur Auflage auf dem ersten Auflageprofil (112) mit dem ersten Auflageprofil (112) entsprechend korrespondierend ausgebildetes zweites Auflageprofil (103) ausgebildet ist,
**dadurch gekennzeichnet, dass**
g) das erste Auflageprofil (112) und/oder das zweite Auflageprofil (103) derart ausgebildet ist/sind, dass zwischen der Splitcastplatte (10) und der Sockelplatte (11) ein oder mehrere diagonale und/oder schräge Spalten (12, 13, 14) gebildet sind, wobei zwischen den Vertiefungen (100) und den Ausbuchtungen (110) ein oder mehrere diagonale oder schräge Spalte (13) gebildet sind, die etwa 0,03 bis 0,06 mm groß sind.

2. Fixierungssystem (1) nach Anspruch 1,
**dadurch gekennzeichnet, dass**
die schrägen Spalten (13) zwischen den Vertiefungen (100) und den Ausbuchtungen (110) 0,055mm groß sind.

3. Fixierungssystem (1) nach einem der vorangegangenen Ansprüche,
**dadurch gekennzeichnet, dass**
die Vertiefungen (100) in ihrem Querschnitt dreieckförmig ausgebildet sind.

4. Fixierungssystem (1) nach einem der vorangegangenen Ansprüche,
**dadurch gekennzeichnet, dass**
sich die Vertiefungen (100) aus Richtung Splitcastplattenrand (105) in Richtung Splitcastplattenzentrum (102) erstrecken.

5. Fixierungssystem (1) nach einem der vorangegangenen Ansprüche,
**dadurch gekennzeichnet, dass**
es zwischen der Splitcastplatte (10) und der Sockelplatte (11) zusätzlich ein oder mehrere Zwischensegmente (17) umfasst, wobei ein Zwischensegment (17) hierzu an einer Seite (170) entsprechend dem Profil der Oberseite (107) der Splitcastplatte (10) und an der gegenüberliegenden Seite (171) entsprechend dem Profil der Unterseite (115) der Sockelplatte (11) ausgebildet ist, in der Weise, dass eine ensprechend den Vorgaben der Verbindung zwischen der Sockelplatte (11) und der Splitcastplatte (10) entsprechende Verbindung sowohl zwischen dem Zwischensegment (17) und der Sockelplatte (11) als auch zwischen dem Zwischensegment (17) und der Splitcastplatte (10) hergestellt werden kann.

6. Fixierungssystem (1) nach einem der vorangegangenen Ansprüche,
**dadurch gekennzeichnet, dass**
an der Splitcastplatte (10) und an der Sockelplatte (11) sich jeweils in der horizontalen Ebene (HE) parallel gegenüberliegende Flächen (104, 113) ausgebildet sind, wobei das erste Auflageprofil (112) und/oder das zweite Auflageprofil (103) derart ausgebildet ist/sind, dass zwischen den Flächen (104, 113) ein oder mehrere horizontale Spalte (14) gebildet sind.

7. Fixierungssystem (1) nach einem der vorangegangenen Ansprüche,
**dadurch gekennzeichnet, dass**
das zweite Auflageprofil (103) an dem zweiten Schrägprofil (101) und das erste Auflageprofil (112) an dem ersten Schrägprofil (111) ausgebildet ist.

8. Fixierungssystem (1) nach einem der vorangegangenen Ansprüche,
**dadurch gekennzeichnet, dass**
das erste Auflageprofil (112) gegenüber dem zweiten Auflageprofil (103) derart ausgebildet ist, dass dieser das zweite Auflageprofil (103) zumindest abschnittsweise nach außen hin überragt.

9. Fixierungssystem (1) nach einem der vorangegangenen Ansprüche,
**dadurch gekennzeichnet, dass**
die Spalten (12, 16, 14) zwischen 0,45mm und 0,5mm groß sind.

10. Fixierungssystem (1) nach einem der vorangegangenen Ansprüche,
**dadurch gekennzeichnet, dass**
an dem zweiten Auflageprofil (103) und an dem ersten Auflageprofil (112) zur gegenseitigen flächigen Auflage miteinander in der horizontalen Ebene (HE) entsprechend korrespondierend ausgebildete Auflageflächen (1030, 1120) ausgebildet sind.

## Claims

1. Fixation system (1) for fixing a dental model, comprising a split cast plate (10) which can be arranged in an articulator and is intended to receive a dental model, and a base plate (11) which can be connected to the split cast plate (10), wherein
a) the split cast plate (10) has a plurality of recesses (100) and
b) on the base plate (11), a plurality of bulges (110) formed to correspond at least in part to the recesses (100)
- or vice versa -
for fixing the position of the split-cast plate (10) in the horizontal (HE) and vertical (VE) planes, wherein
c) the base plate (11) comprises at least one first sloping profile (111) which runs at least partially around the edge and is bevelled outwards, and
d) the split cast plate (10) comprises at least one second sloping profile (101) which is at least partially circumferential at the edge, slopes outwards and is designed to correspond to the first sloping profile (111), wherein
e) at least one first support profile (112) is formed on the base plate (11), which at least partially surrounds the base plate (11) at the edge, and
f) at least one second support profile (103) is formed on the split cast plate (10), which at least partially surrounds the edge and is designed to correspond to the first support profile (112) for support on the first support profile (112).
**characterised in that**
g) the first support profile (112) and/or the second support profile (103) is/are designed such that one or more diagonal and/or slanted gaps (12, 13, 14) are formed between the split cast plate (10) and the base plate (11), wherein one or more diagonal or slanted gaps (13) are formed between the recesses (100) and the protrusions (110), which are approximately 0.03 to 0.06 mm in size.

2. Fixation system (1) according to claim 1,
**characterised in that**
the oblique columns (13) between the recesses (100) and the bulges (110) are 0.055 mm in size.

3. Fixation system (1) according to one of the preceding claims,
**characterised in that**
the recesses (100) are triangular in cross-section.

4. Fixation system (1) according to one of the preceding claims,
**characterised in that**
the recesses (100) extend from the split cast plate edge (105) towards the split cast plate centre (102).

5. Fixation system (1) according to one of the preceding claims,
**characterised in that**
it additionally comprises one or more intermediate segments (17) between the split cast plate (10) and the base plate (11), wherein an intermediate segment (17) is formed on one side (170) corresponding to the profile of the upper side (107) of the split cast plate (10) and on the opposite side (171) corresponding to the profile of the lower side (115) of the base plate (11) in such a way that a connection corresponding to the specifications of the connection between the base plate (11) and the split cast plate (10) can be established both between the intermediate segment (17) and the base plate (11) and between the intermediate segment (17) and the split cast plate (10).

6. Fixation system (1) according to one of the preceding claims,
**characterised in that**
on the split cast plate (10) and on the base plate (11), surfaces (103, 112) are formed in the horizontal plane (HE) parallel to each other, wherein the first support profile (112) and/or the second support profile (103) are designed such that between the surfaces (103, (104, 113) are formed in the horizontal plane (HE), wherein the first support profile (112) and/or the second support profile (103) is/are designed such that one or more horizontal gaps (14) are formed between the surfaces (104, 113).

7. Fixation system (1) according to one of the preceding claims,
**characterised in that**
the second support profile (103) is formed on the second inclined profile (101) and the first support profile (112) is formed on the first inclined profile (111).

8. Fixation system (1) according to one of the preceding claims,
**characterised in that**
the first support profile (112) is designed in relation to the second support profile (103) in such a way that it protrudes beyond the second support profile (103) at least in sections.

9. Fixation system (1) according to one of the preceding claims,
**characterised in that**
the gaps (12, 16, 14) are between 0.45 mm and 0.5 mm wide.

10. Fixation system (1) according to one of the preceding claims,
**characterised in that**
Support surfaces (1030, 1120) are formed on the second support profile (103) and on the first support profile (112) for mutual flat support in the horizontal plane (HE) in a correspondingly arranged manner.

## Revendications

1. Système de fixation (1) pour fixer un modèle dentaire, comprenant une plaque à double moulage (10) pouvant être disposée dans un articulateur et prévue pour recevoir un modèle dentaire, et une plaque de socle (11) pouvant être reliée à la plaque à double moulage (10), dans lequel
a) la plaque de moulage divisée (10) comporte plusieurs renfoncements (100) et
b) la plaque de base (11) comporte plusieurs renflements (110) correspondant au moins par sections aux renfoncements (100)
- ou inversement -,
pour fixer la position de la plaque en deux parties (10) dans le plan horizontal (HE) et le plan vertical (VE),
c) la plaque de base (11) comprenant au moins un premier profil incliné (111) s'étendant au moins partiellement sur le pourtour et biseauté vers l'extérieur, et
d) la plaque Splitcast (10) comprend au moins un deuxième profil incliné (101) s'étendant au moins partiellement sur le pourtour, biseauté vers l'extérieur et formé de manière à correspondre au premier profil incliné (111),
e) au moins un premier profilé d'appui (112) est formé sur la plaque de base (11), au moins partiellement sur le pourtour de la plaque de base (11), et
f) au moins un deuxième profilé d'appui (103) est formé sur la plaque en splitcast (10), lequel profilé d'appui s'étend au moins partiellement sur le pourtour et est conçu de manière à correspondre au premier profilé d'appui (112) afin de s'appuyer sur celui-ci,
**caractérisé en ce que**
g) le premier profilé d'appui (112) et/ou le deuxième profilé d'appui (103) sont conçus de telle sorte qu'une ou plusieurs fentes diagonales et/ou obliques (12, 13, 14) sont formées entre la plaque à moulage séparé (10) et la plaque de base (11), une ou plusieurs fentes diagonales ou obliques (13) d'environ 0,03 à 0,06 mm étant formées entre les renfoncements (100) et les saillies (110).

2. Système de fixation (1) selon la revendication 1,
**caractérisé en ce que**
les fentes obliques (13) entre les renfoncements (100) et les renflements (110) mesurent 0,055 mm.

3. Système de fixation (1) selon l'une des revendications précédentes,
**caractérisé en ce que**
les renfoncements (100) ont une section transversale triangulaire.

4. Système de fixation (1) selon l'une des revendications précédentes,
**caractérisé en ce que**
les renfoncements (100) s'étendent depuis le bord (105) de la plaque moulée par division vers le centre (102) de la plaque moulée par division.

5. Système de fixation (1) selon l'une des revendications précédentes,
**caractérisé en ce que**
il comprend en outre un ou plusieurs segments intermédiaires (17) entre la plaque à moulage séparé (10) et la plaque de base (11), un segment intermédiaire (17) étant formé à cet effet sur un côté (170) conformément au profil de la face supérieure (107) de la plaque à moulage séparé (10) et sur le côté opposé (171) conformément au profil de la face inférieure (115) de la plaque de base (11), de telle sorte qu'une liaison correspondant aux spécifications de la liaison entre la plaque de base (11) et la plaque en deux parties (10) peut être réalisée aussi bien entre le segment intermédiaire (17) et la plaque de base (11) qu'entre le segment intermédiaire (17) et la plaque en deux parties (10).

6. Système de fixation (1) selon l'une des revendications précédentes,
**caractérisé en ce que**
sur la plaque de scission (10) et sur la plaque de socle (11) sont formées respectivement des surfaces parallèles opposées dans le plan horizontal (HE) (104, 113) sont formées dans le plan horizontal (HE), le premier profilé d'appui (112) et/ou le deuxième profilé d'appui (103) étant conçu(s) de telle sorte qu'une ou plusieurs fentes horizontales (14) sont formées entre les surfaces (104, 113).

7. Système de fixation (1) selon l'une des revendications précédentes,
**caractérisé en ce que**
le deuxième profilé d'appui (103) est formé sur le deuxième profilé incliné (101) et le premier profilé d'appui (112) est formé sur le premier profilé incliné (111).

8. Système de fixation (1) selon l'une des revendications précédentes,
**caractérisé en ce que**
le premier profilé d'appui (112) est conçu par rapport au deuxième profilé d'appui (103) de telle sorte qu'il dépasse du deuxième profilé d'appui (103) vers l'extérieur, au moins par sections.

9. Système de fixation (1) selon l'une des revendications précédentes,
**caractérisé en ce que**
les fentes (12, 16, 14) ont une taille comprise entre 0,45 mm et 0,5 mm.

10. Système de fixation (1) selon l'une des revendications précédentes,
**caractérisé en ce que**
des surfaces d'appui (1030, 1120) correspondantes sont formées sur le deuxième profilé d'appui (103) et sur le premier profilé d'appui (112) pour s'appuyer mutuellement à plat dans le plan horizontal (HE).
